Europäisches Patentamt

European Patent Office

Office européen des brevets

(11) Publication number: **0 301 514 B1**

# EUROPEAN PATENT SPECIFICATION

(45) Date of publication of patent specification: **02.01.92**   (51) Int. Cl.⁵: **F25J 3/00**, //F25J3/08

(21) Application number: **88112153.7**

(22) Date of filing: **27.07.88**

(54) **Process and apparatus to produce ultra high purity oxygen from a liquid feed.**

(30) Priority: **28.07.87 US 78852**

(43) Date of publication of application:
**01.02.89 Bulletin  89/05**

(45) Publication of the grant of the patent:
**02.01.92 Bulletin  92/01**

(84) Designated Contracting States:
**BE DE ES FR IT**

(56) References cited:
**DE-C- 921 809**
**FR-A- 1 436 385**

(73) Proprietor: **UNION CARBIDE CORPORATION**
**39 Old Ridgebury Road**
**Danbury Connecticut 06817(US)**

(72) Inventor: **Cheung, Harry**
**33 Welwyn Circle**
**Buffalo, N.Y. 14223(US)**

(74) Representative: **Schwan, Gerhard, Dipl.-Ing.**
**Elfenstrasse 32**
**W-8000 München 83(DE)**

## Description

This invention relates generally to the production of ultra high purity oxygen from a liquid feed stream.

Commercial grade high purity oxygen has a nominal purity of 99.5 percent. Generally commercial grade high purity oxygen is produced by the well known cryogenic fractional distillation of air, most often using a stacked double column arrangement. The commercially available high purity oxygen is suitable for use in a great many applications.

Commercial grade high purity oxygen contains a small amount of impurities. The impurities include both light impurities having a vapor pressure greater than oxygen, and heavy impurities having a vapor pressure less than oxygen. Occasionally oxygen is required which has significantly less impurities than the commercially available high purity oxygen. In these instances, high purity oxygen has heretofore been upraded to ultra high purity oxygen by means of catalytic combustion.

The electronics industry requires the use of ultra high purity oxygen for many applications. However, the conventional catalytic combustion method for producing ultra high purity oxygen is not suitable because of the consequent production of particulates generated from the granulated catalyst.

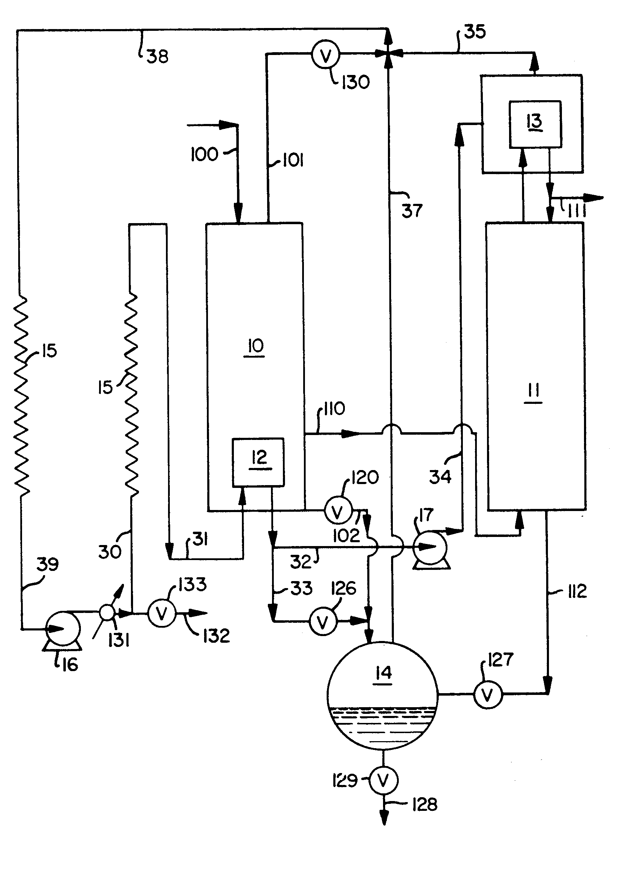

It is also known (FR-A-1 436 385) to produce ultra high purity oxygen by a process which uses two columns each provided with a reboiler at the base of the column and a condenser at the top of the column. In one embodiment (Fig. 5 of FR-A-1 436 385) a saturated vapor oxygen feed stream of commercial grade of purity obtained from a conventional oxygen purification plant is passed to the reboiler of the first column (stripping column) where the saturated oxygen rich vapor is condensed to liquid by heat exchange with evaporating liquid in the lower portion of the stripping column. The condensed oxygen rich liquid which contains light impurities and heavy impurities is drawn off from the condenser and is expanded to obtain cooled, partially vaporized liquid which is introduced at the top of the stripping column below the condenser thereof. The liquid fraction of the partially vaporized liquid is passed down the stripping column, and light impurities are stripped from the downflowing liquid into upflowing vapor. Resulting liquid is vaporized in the reboiler by indirect heat exchange with the condensing saturated vapor feed stream. A first vapor portion of this vaporized liquid, including a fraction of liquid impurities, is introduced into the second column (absorbing column) at an intermediate level thereof, whereas a second, major portion of the vaporized liquid is passed up the stripping column as the upflowing vapor and then is returned to the main column of the conventional oxygen purification plant. The first vapor portion is passed up the absorbing column. The liquid fraction, including impurities, trickels down through the absorbing column, and the liquid oxygen fraction, after reboiling, raises to the top of the absorbing column, becoming progressively puriefied. Ultra high purity oxygen vapor is partially condensed in the condenser at the top of the absorbing column, and product ultra high purity oxygen is recovered therefrom. In a further embodiment (Fig. 3 of FR-A-1 436 385) commercially pure liquid oxygen is introduced into the first column at an intermediate level thereof, and a heavy fraction is drained from the bottom of the first column. The remaining uprising oxygen is withdrawn from the top of the first column, is rewarmed in an additional heat exchanger, is compressed, is cooled in a further heat exchanger, is condensed in the reboiler at the base of the second column and then is introduced to the top of the second column. The oxygen liquid is passed down the second column as descending liquid, and the resulting ultra high purity oxygen is withdrawn from the bottom of the second column. A nitrogen heat pump including the two afore-mentioned heat exchangers links the two columns, wherein a part of the liquid nitrogen condensed in and withdrawn from the reboiler at the base of the first column is expanded and then is passed to the condenser at the top of the second column.

It is an object of this invention to provide for a process and for an apparatus which do not need the use of catalytic combustion, which allow to produce ultra high purity oxygen with relatively high efficiency, low cost and little mechanical complexity and which largely preserve the liquid state of the oxygen feed stream.

The above and other objects which will become apparent to those skilled in the art upon a reading of this disclosure are attained by the present invention one aspect of which is:

A process to produce ultra high purity oxygen from a liquid feed comprising:

(a) introducing feed liquid containing oxygen, light impurities and heavy impurities into a stripping column;

(b) passing feed liquid down the stripping column and stripping light impurities from downflowing liquid into upflowing vapor;

(c) vaporizing resulting liquid by indirect heat exchange with condensing fluid, passing a first vapor portion of said vaporized liquid into an absorbing column and passing a second portion thereof up the stripping column as said upflowing vapor;

(d) passing first vapor portion up the absorbing column and absorbing heavy impurities from ascending vapor into descending liquid to produce ultra high purity oxygen vapor;

(e) condensing ultra high purity oxygen vapor and passing resaulting ultra high puritiy oxygen liquid down the absorbing column as descending liquid, and

(f) recovering product ultra high purity oxygen;

characterized by

- passing some of the condensed fluid resulting from the indirect heat exchange of step (c) in indirect heat exchange with ultra high purity oxygen to carry out the condensation of step (e) thus producing vaporized fluid; and
- passing at least one of

(i) condensed fluid resulting from the indirect heat exchange of step (c);

(ii) liquid from the lower portion of the stripping column; and

(iii) liquid from the lower portion of the absorbing column

to a liquid reservoir, flashing vapor from the resulting liquid in the liquid reservoir, and condensing flashed vapor as the condensing fluid to carry out the vaporization of step (c).

Another aspect of this invention is:

An Apparatus to produce ultra high purity oxygen from a liquid feed comprising:

(a) a stripping column having a reboiler;

(b) an absorbing column having a condenser;

(c) conduit means from the vaporizing side of the reboiler to the lower portion of the absorbing column; and

(d) means to recover fluid from the absorbing column;

characterized by

(e) conduit means from the condensing side of the reboiler to the vaporizing side of the condenser;

(f) a liquid reservoir in flow communication by conduit means with at least one of:

(i) the condensing side of the reboiler;

(ii) the lower portion of the stripping column; and

(iii) the lower portion of the absorbing column; and

(g) means to pass vapor from the liquid reservoir to the condensing side of the reboiler.

The term "column", as used herein means a distillation or fractionation column or zone, i.e., a contacting column or zone wherein liquid and vapor phases are countercurrently contacted to effect separation of a fluid mixture, as for example, by contacting of the vapor and liquid phases on a series of vertically spaced trays or plates mounted within the column or alternatively, on packing elements with which the column is filled. For a further discussion of distillation columns see the Chemical Engineers' Handbook, Fifth Edition, edited by R.H. Perry and C.H. Chilton, McGraw-Hill Book Company, New York, Section 13, "Distillation" B.D. Smith et al, page 13-3 The Continuous Distillation Process. The term, "double column" is used to mean a higher pressure column having its upper end in heat exchange relation with the lower end of a lower pressure column. A further disussion of double columns appears in Ruheman "The Separation of Gases" Oxford University Press, 1949, Chapter VII, Commercial Air Separation.

The term "indirect heat exchange", as used herein means the bringing of two fluid streams into heat exchange relation without any physical contact or intermixing of the fluids with each other.

As used herein, the term "tray" means a contacting stage, which is not necessarily an equilibrium stage, and may mean other contacting apparatus such as packing having a separation capability equivalent to one tray.

As used herein, the term "equilibrium stage" means a vapor-liquid contacting stage whereby the vapor and liquid leaving the stage are in mass transfer equilibrium, e.g. a tray having 100 percent efficiency or a packing element height equivalent to one theoretical plate (HETP).

As used herein, the term "stripping column" means a column operated with sufficient vapor upflow relative to liquid downflow to achieve separation of a volatile component such as argon from the liquid into the vapor in which the volatile component such as argon becomes progressively richer upwardly.

As used herein, the term "absorbing column" means a column operated with sufficient liquid downflow relative to vapor upflow to achieve separation of a less volatile component such as methane from the vapor into the liquid in which the less volatile component such as methane becomes progressively richer downwardly.

As used herein, the term "reboiler" means a heat exchange device which generates column upflow vapor from column bottom liquid.

As used herein, the term "condenser" means a heat exchange device which generates column downflow liquid from column top vapor.

As used herein, the term "vaporizing side" means that side of an indirect heat exchange device upon which saturated liquid undergoes phase change to saturated vapor.

As used herein, the term "condensing side" means that side of an indirect heat exchange device upon which saturated vapor undergoes phase change to saturated liquid.

The single Figure is a schematic flow diagram of a preferred embodiment of the invention wherein the invention is employed standing alone.

Referring now to the drawing, feed liquid 100 is introduced, preferably at the top, into stripping column 10 having reboiler 12. In the embodiment illustrated in the drawing, reboiler 12 is shown as being physically within stripping column 10. However, this arrangement is not necessary and the reboiler for the stripping column could be physically outside the stripping column and connected thereto by appropriate piping. The stripping column 10 operates at a pressure within the range of from 71 to 507 kPa (10.3 to 73.5 pounds per square inch absolute (psia)), preferably within the range of from 101 to 474 kPa (14.7 to 68.8 psia).

Feed liquid 100 is comprised primarily of oxygen, generally at a concentration within the range of from 95 to 99.9 percent. Typically feed liquid 100 is commercial grade high purity oxygen having a concentration of about 99.5 percent oxygen. Feed liquid 100 also contains light impurities, such as argon, nitrogen, hydrogen and helium, which have a higher vapor pressure or volatility than oxygen, and heavy impurities, such as krypton, xenon and hydrocarbons, which have a lower vapor pressure or volatility than oxygen. Feed liquid 100 may be from any source. In the illustrated embodiment the feed liquid 100 is taken directly from a cryogenic air separation plant. In the case where the cryogenic air separation plant is of the double column type, preferably the feed liquid is taken from a point above the main condenser. Other sources of feed liquid include cryogenic storage tanks and reservoirs which are independent of an air separation plant.

The feed liquid is passed down the stripping column 10 and light impurities are stripped from the downflowing liquid into upflowing vapor. As used herein "impurities" means both one specie of impurity as well as more than one specie. Resulting stripped liquid is vaporized by indirect heat exchange on the vaporizing side of reboiler 12. Most of the resulting stripped liquid is so vaporized while a small remaining portion thereof is removed through valve 120 and drain 102. Reboiler 12 is driven by condensing vapor 31 which is derived from a stream or streams internal to the illustrated apparatus.

A first portion of the vaporized liquid from the vaporizing side of reboiler 12 is passed as stream 110, by any suitable conduit means, into the lower portion of absorbing column 11, preferably at the bottom of absorbing column 11. A second portion of the resulting vaporized liquid from the vaporizing side of reboiler 12 is passed up stripping column 10 as the upflowing vapor into which light impurities are stripped from the downflowing liquid. The resulting vapor containing stripped light impurities is removed from stripping column 10 as stream 101. In the illustrated standalone embodiment, stream 101 preferably forms part of a recycle which is used to drive reboiler 12.

Stripping column 10 is operated such that argon stripping factor S preferably exceeds 1.0 and most preferably exceeds 1.1. Argon stripping factor S = KV/L where V is the vapor molar flow in the stripping column, L is the liquid molar flow in the stripping column, and K is the ratio of the mole fraction of argon impurity in the gase phase and the mole fraction of argon impurity in the liquid phase at thermodynamic equilibrium. When operated in this manner, stripping column 10 serves to reduce the concentration of argon from feed 100 to stream 110 by about three orders of magnitude. Since argon is the least volatile of the light impurities, all other light impurities will be reduced in concentration by operation of stripping column by an even greater factor.

Vapor in stream 110 is passed into and up absorbing column 11 having condenser 13. In the embodiment illustrated in the drawing, condenser 13 is shown as being physically outside of the main part of absorbing column 11. However this arrangement is not necessary and the condenser could be within the main part of the absorbing column. That is, the condenser forms part of the absorbing column whether or not it is physically within the main column section. Fluid is passed by conduit means from the condensing side of reboiler 12 to the upper portion of absorbing column 11, e.g. to the vaporizing side of the condenser, to drive condenser 13. The absorbing column operates at a pressure preferably within the range of from 71 to 507 kPa (10.3 to 73.5 psia). The vapor is passed up the absorbing column and heavy impurities are absorbed from the ascending vapor into descending liquid thus producing ultra high purity oxygen vapor. At least some of the ultra high purity oxygen vapor is passed to the condensing side of condenser 13. Some of the ultra high purity oxygen vapor may be recovered as product ultra high purity oxygen.

Ultra high purity oxygen liquid condensed in condenser 13 is then passed down absorbing column 11 as the descending liquid into which heavy impurities are absorbed. Prior to being passed down absorbing column 11, a portion of the liquid ultra high purity oxygen may be recovered as product ultra high purity oxygen. In the illustrated embodiment the product ultra high purity oxygen is recovered as liquid stream 111.

Product ultra high purity oxygen may be recovered as gas prior to condensation in condenser 13 or, as illustrated in the single Figure, it may be recovered as liquid after the condensation in condenser 13. In addition, the product ultra high purity oxygen may be recovered as both gas and liquid from both locations. Typically the product ultra high purity oxygen will have an oxygen purity of at least 99.999 percent and may have a purity of up to 99.99999 percent.

Condenser 13 is driven by passing at least some of the condensed fluid from the condensing side of reboiler 12 by conduit means to the vaporizing side of condenser 13 wherein the fluid vaporizes to effect the aforesaid condensation of the ultra high purity oxygen. In the illustrated embodiment, a portion 32 of the condensed fluid from reboiler 12 is pumped by pump 17 and passed as stream 34 into the vaporizing side of condenser 13, while the remainder is passed out as stream 33. The resulting vaporized fluid is passed out of the vaporizing side of condenser 13 as stream 35.

Descending liquid within the absorbing column 11 containing absorbed heavy impurities is removed from the absorbing column as stream 112. Stream 112 preferably forms recycle fluid.

Absorbing column 11 is operated such that methane absorbing factor A preferably exceeds 1.0 and most preferably exceeds 1.1. Methane absorbing factor $A = \ell/kv$ where $\ell$ is the liquid molar flow in the absorbing column, v is the vapor molar flow in the absorbing column, and k is the ratio of the mole fraction of methane impurity in the gas phase and the mole fraction of methane impurity in the liquid phase at thermodynamic equilibrium. When operated in this manner, absorbing column 11 serves to reduce the concentration of methane from stream 110 to the product ultra high purity oxygen, such as might be recovered in stream 111, by about three orders of magnitude. Since methane is the most volatile of the heavy impurities, all other heavy impurities will be reduced in concentration by operation of the absorbing column by an even greater factor.

Either of stripping column 10 or absorbing column 11, or both, may be comprised of a series of vertically spaced trays or of column packing. Those skilled in the mass transfer art are familiar with the many types of trays and column packing available and no further detailed discussion is necessary here.

The fluids to drive the reboiler and the condenser are generated internally. Particularly, liquid reservoir or tank 14 is fed by at least one, and preferably three, internal streams by conduit means. One reservoir feed stream is condensed fluid 33 from the condensing side of reboiler 12 which passes through valve 126 and into reservoir 14. Another reservoir feed stream is drain 102 from the lower portion, preferably the bottom, of stripping column 10. A third reservoir feed stream is stream 112 from the lower portion, preferably the bottom, of absorbing column 11 which is passed through valve 127 and into reservoir 14.

In reservoir 14 vapor is flashed off the liquid and is passed out of the reservoir as stream 37. Flash vapor is produced due to throttling of saturated liquid across valves 120, 126 and 127. The flashed vapor is then passed, such as by conduit means, to the condensing side of reboiler 12 to drive reboiler 12. Preferably, as will be explained more fully infra, streams 35 and 101 are combined with flashed vapor 37 to form stream 38 which is recycled to the condensing side of reboiler 12.

Liquid stream 128 is passed out of reservoir 14 through valve 129. This stream would generally have an oxygen concentration of at least 99.5 percent and is recovered as commercial high purity oxygen. This stream is not recycled in order to prevent excess heavy impurity buildup.

In addition to stream 37, either one or both of two other streams could be passed, such as by conduit means, to the vaporizing side of reboiler 12. One such stream is stream 101 taken from the upper portion, preferably the top, of stripping column 10. The other stream is stream 35 which is vaporized fluid from the vaporizing side of condenser 13. Preferably all three of streams 37, 35 and 101 are passed to the condensing side of reboiler 12 to drive reboiler 12. The single Figure illustrates a preferred embodiment wherein these three streams are combined, after stream 101 passes through valve 130, to form stream 38.

Stream 38 is warmed by indirect heat exchange by passage through heat exchanger 15. Warmed stream 39 is compressed by compressor 16 and aftercooled by cooler 131. Stream 39 is then passed as reliquefaction feed stream 30 through heat exchanger 15 wherein it is cooled by indirect heat exchange against warming stream 38. The cooled reliquefaction stream emerges from heat exchanger 15 and is passed as stream 31 to the condensing side of reboiler 12 to drive reboiler 12. A portion 132 may be passed out of stream 39 through valve 133 prior to its becoming reliquefaction stream 30. The flowrate of stream 132 depends upon heat leakage into the process and could be nearly zero if a significant amount of the product ultra high purity oxygen is recovered in gaseous form.

A major advantage of the subject invention such as is illustrated in the single Figure is that the state of oxygen is largely preserved, i.e. nearly all of the oxygen can be removed from the process in liquid form. This advantage is demonstrated by the data presented in the Table below which is a computer simulation of the embodiment illustrated in the single Figure. The stream numbers in the Table correspond to those of the Figure.

TABLE

| Stream No. | Flow | | Pressure | | Temperature °K | Impurity, PPM | |
|---|---|---|---|---|---|---|---|
| | | | | | | Argon | Methane |
| | m³/h | CFH | kPa | PSIA | | | |
| 100-liquid | 233.6 | 8250 | 175 | 25.4 | 95.8 | 4000 | 8.1 |
| 101-gas | 187.5 | 6620 | 175 | 25.4 | 95.8 | 4986 | 2.5 |
| 102-liquid | 0.85 | 30 | 193 | 28.0 | 96.9 | 4 | 94.5 |
| 110-gas | 45.3 | 1600 | 193 | 28.0 | 96.9 | 4 | 29.5 |
| 111-liquid | 28.3 | 1000 | 175 | 25.4 | 95.8 | 5 | 0.03 |
| 112-liquid | 17.0 | 600 | 193 | 28.0 | 96.5 | 2.5 | 78.6 |
| 30 | 240.4 | 8490 | 255 | 37 | 300 | | |
| 132 | 2.55 | 90 | 255 | 37 | 300 | | |
| 31 | 240.4 | 8490 | 234 | 34 | 99.5 | | |
| 32 | 46.7 | 1650 | 230 | 33.4 | 98.9 | | |
| 33 | 193.7 | 6840 | 230 | 33.4 | 98.9 | | |
| 34 | 46.7 | 1650 | 310 | 45 | 100 | | |
| 35 | 46.7 | 1650 | 145 | 21 | 93.8 | | |
| 128 | 202.7 | 7160 | 152 | 22 | 94.3 | | |
| 37 | 8.78 | 310 | 152 | 22 | 94.3 | | |
| 38 | 243.0 | 8580 | 145 | 21 | 95 | | |
| 39 | 243.0 | 8580 | 124 | 18 | 295 | | |

The abreviation CFH stands for cubic foot per hour, at standard conditions of 101.3 kPa (1 atmosphere) and 21.1°C (70 degrees Fahrenheit), °K stands for degrees Kelvin, and PPM stands for parts per million. The stripping column operated at an argon stripping factor of 1.2 and had 33 equilibrium stages or theoretical trays and the absorbing column operated at a methane absorbing factor of 1.2 and had 31 equilibrium stages or theoretical trays. As can be seen, the argon impurity is reduced from 4000 to 5 ppm and the methane impurity is reduced from 8.1 to 0.03 ppm. Oxygen effluent streams 111 and 128 equal 231.0 m³/h (8160 CFH) while feed stream 100 equals 233.6 m³/h (8250 CFH) resulting in liquid state conservation of about 99 percent.

**Claims**

1.  A process to produce ultra high purity oxygen from a liquid feed comprising:

    (a) introducing feed liquid (100) containing oxygen, light impurities and heavy impurities into a stripping column (10);
    (b) passing feed liquid down the stripping column (10) and stripping light impurities from downflowing liquid into upflowing vapor;
    (c) vaporizing resulting liquid by indirect heat exchange with condensing fluid, passing a first vapor portion (110) of said vaporized liquid into an absorbing column (11) and passing a second portion thereof up the stripping column (10) as said upflowing vapor;
    (d) passing first vapor portion (110) up the absorbing column (11) and absorbing heavy impurities from ascending vapor into descending liquid to produce ultra high purity oxygen vapor;
    (e) condensing ultra high purity oxygen vapor and passing resulting ultra high purity oxygen liquid down the absorbing column (11) as descending liquid, and
    (f) recovering product ultra high purity oxygen,
    characterized by
    - passing some of the condensed fluid (32) resulting from the indirect heat exchange of step (c) in indirect heat exchange with ultra high purity oxygen to carry out the condensation of step (e) thus producing vaporized fluid (35), and
    - passing at least one of
        (i) condensed fluid (33) resulting from the indirect heat exchange of step (c),
        (ii) liquid (102) from the lower portion of the stripping column (10); and
        (iii) liquid (112) from the lower portion of the absorbing column (11)

to a liquid reservoir (14), flashing vapor from the resulting liquid in the liquid reservoir, and condensing flashed vapor (37) as the condensing fluid to carry out the vaporization of step (c).

2. The process of claim 1 further comprising adding at least one of:

(iv) vapor (101) from the upper portion of the stripping column (10), and
(v) vaporized fluid (35)
to the flashed vapor (37) prior to the vaporization of step (c).

3. The process of claim 1 or 2 further comprising recovering liquid from the liquid reservoir (14) as product liquid oxygen (128).

4. The process of any one of the preceding claims wherein the stripping column (10) and the absorbing column (11) are operated such that the product ultra high purity oxygen has an oxygen concentration of at least 99.999 percent.

5. The process of any one of the preceding claims wherein product ultra high purity oxygen is recovered as vapor prior to the condensation of step (e).

6. The process of any one of the preceding claims wherein product ultra high purity oxygen is recovered as liquid (111) after the condensation of step (e).

7. The process of any one of the preceding claims wherein the stripping column (10) is operated so that the argon stripping factor S is greater than 1 where S = KV/L, V is the vapor molar flow in the stripping column, L is the liquid molar flow in the stripping column, and K is the ratio of the mole fraction of argon impurity in the gas phase and the mole fraction of argon impurity in the liquid phase at thermodynamic equilibrium.

8. The process of any one of the preceding claims wherein the absorbing column (11) is operated so that the methane absorbing factor A is greater than 1 where A = $\ell$/kv, $\ell$ is the liquid molar flow in the absorbing column, v is the vapor molar flow in the absorbing column, and k is the ratio of the mole fraction of methane impurity in the gas phase and the mole fraction of methane impurity in the liquid phase at thermodynamic equilibrium.

9. The process of any one of the preceding claims wherein the feed liquid (100) is taken from a double column cryogenic air separation plant at a point above the main condenser.

10. The process of any one of the preceding claims wherein the stripping column (10) is operated at a pressure within the range of from 71 kPa (10.3 psia) to 507 kPa (73.5 psia).

11. The process of any one of the preceding claims wherein the absorbing column is operated at a pressure within the range of from 71 kPa (10.3 psia) to 507 kPa (73.5 psia).

12. An apparatus to produce ultra high purity oxygen from a liquid feed (100) comprising:

(a) a stripping column (10) having a reboiler (12);
(b) an absorbing column (11) having a condenser (13);
(c) conduit means (110) from the vaporizing side of the reboiler (12) to the lower portion of the absorbing column (11); and
(d) means (111) to recover fluid from the absorbing column (11),

characterized by

(e) conduit means (122) from the condensing side of the reboiler (12) to the vaporizing side of the condenser (13);
(f) a liquid reservoir (14) in flow communication by conduit means with at least one of:
    (i) the condensing side of the reboiler (12);
    (ii) the lower portion of the stripping column (10); and

(iii) the lower portion of the absorbing column (11); and

(g) means (37, 38, 39, 30, 31) to pass vapor from the liquid reservoir (14) to the condensing side of the reboiler (12)

**13.** The apparatus of claim 12 further comprising means (128, 129) to pass liquid out from the liquid reservoir.

**14.** The apparatus of claim 13 further comprising means (35, 38, 39, 30, 31) to pass vapor from the vaporizing side of the condenser (13) to the condensing side of the reboiler (12).

**15.** The apparatus of claim 13 or 14 further comprising means (101, 38, 39, 30, 31) to pass vapor from the upper portion of the stripping column (10) to the condensing side of the reboiler (12).

**Revendications**

**1.** Procédé de production d'oxygène de pureté ultra-haute à partir d'une charge liquide, qui consiste :

(a) à introduire une charge liquide (100) contenant de l'oxygène, des impuretés légères et des impuretés lourdes dans une colonne d'entraînement (10) ;

(b) à faire descendre la charge liquide dans la colonne d'entraînement (10) et à entraîner les impuretés légères du liquide descendant dans la vapeur ascendante ;

(c) à vaporiser le liquide résultant par échange indirect de chaleur avec le fluide qui se condense, à faire arriver une première portion de vapeur (110) dudit liquide vaporisé dans une colonne absorbante (11) et à faire monter une seconde portion de ce liquide dans la colonne d'entraînement (10) pour constituer ladite vapeur ascendante ;

(d) à faire monter la première portion de vapeur (110) dans la colonne absorbante (11) et à absorber les impuretés lourdes de la vapeur ascendante dans le liquide descendant pour produire de la vapeur d'oxygène de pureté ultra-haute ;

(e) à condenser la vapeur d'oxygène de pureté ultra-haute et à faire passer l'oxygène liquide de pureté ultra-haute en courant liquide descendant dans la colonne d'absorption (11), et

(f) à recueillir comme produit de l'oxygène de pureté ultra-haute,

caractérisé par

- le passage d'une partie du fluide condensé (32) résultant de l'échange indirect de chaleur de l'étape (c) en contact d'échange indirect de chaleur avec de l'oxygène de pureté ultra-haute pour effectuer la condensation de l'étape (e) en produisant ainsi du fluide vaporisé (35) et

- le passage d'au moins l'un

(i) du fluide condensé (33) résultant de l'échange indirect de chaleur de l'étape (c),

(ii) du liquide (102) venant de la portion inférieure de la colonne d'entraînement (10) ; et

(iii) du liquide (112) venant de la portion inférieure de la colonne d'absorption (11)

dans un réservoir de liquide (14), la détente instantanément la vapeur du liquide résultant dans le réservoir de liquide et la condensation de la vapeur (37) détendue instantanément comme fluide de condensation servant à la conduite de la vaporisation de l'étape (c).

**2.** Procédé suivant la revendication 1, consistant en outre à ajouter au moins l'un :

(i) de la vapeur (101) de la portion supérieure de la colonne d'entraînement (10) et

(v) du fluide (35) vaporisé

à la vapeur (37) détendue instantanément avant la vaporisation dans l'étape (c).

**3.** Procédé suivant la revendication 1 ou 2, consistant en outre à recueillir le liquide du réservoir à liquide (14) comme oxygène liquide (128) constituant le produit.

**4.** Procédé suivant l'une quelconque des revendications précédentes, dans lequel la colonne d'entraînement (10) et la colonne d'absorption (11) sont conduites de manière que l'oxygène de pureté ultra-haute obtenu comme produit ait une concentration en oxygène d'au moins 99,999 pour cent.

**5.** Procédé suivant l'une quelconque des revendications précédentes, dans lequel l'oxygène de pureté ultra-haute obtenu comme produit est recueilli comme vapeur avant la condensation dans l'étape (e).

**6.** Procédé suivant l'une quelconque des revendications précédentes, dans lequel l'oxygène de pureté ultra-haute obtenu comme produit est recueilli comme liquide (111) après la condensation dans l'étape (e).

7. Procédé suivant l'une quelconque des revendications précédentes, dans lequel la colonne d'entraînement (10) est conduite de manière que le facteur S d'entraînement de l'argon soit supérieur à 1, S ayant la valeur KV/L où V est l'écoulement molaire de la vapeur dans la colonne d'entraînement, L est l'écoulement molaire du liquide dans la colonne d'entraînement et K est le rapport de la fraction molaire de l'argon présent comme impureté dans la phase gazeuse à la fraction molaire de l'argon présent comme impureté dans la phase liquide à l'équilibre thermodynamique.

8. Procédé suivant l'une quelconque des revendications précédentes, dans lequel la colonne absorbante (11) est conduite de manière que le facteur A d'absorption du méthane soit supérieur à 1, A ayant la valeur l/kv où l est l'écoulement molaire du liquide dans la colonne d'absorption, v est l'écoulement molaire de la vapeur dans la colonne d'absorption et k est le rapport de la fraction molaire du méthane présent comme impureté dans la phase gazeuse à la fraction molaire du méthane présent comme impureté dans la phase liquide à l'équilibre thermodynamique.

9. Procédé suivant l'une quelconque des revendications précédentes, dans lequel la charge du liquide (100) est prélevée dans une installation de fractionnement d'air cryogénique à double colonne en un point situé au-dessus du condenseur principal.

10. Procédé suivant l'une quelconque des revendications précédentes, dans lequel la colonne d'entraînement (10) fonctionne à une pression absolue comprise dans la plage de 71 kPa (10,3 lb/in$^2$) à 507 kPa (73,5 lb/in$^2$).

11. Procédé suivant l'une quelconque des revendications précédentes, dans lequel la colonne d'absorption est conduite à une pression absolue comprise dans la plage de 71 kPa (10,3 lb/in$^2$) à 507 kPa (73,5 lb/in$^2$).

12. Appareil de production d'oxygène de pureté ultra-haute à partir d'une charge liquide (100), comprenant :

    (a) une colonne d'entraînement (10) munie d'un rebouilleur (12) ;
    (b) une colonne d'absorption (11) munie d'un condenseur (13) ;
    (c) un conduit (110) partant du côté vaporisation du rebouilleur (12) et arrivant à la portion inférieure de la colonne d'absorption (11) ; et
    (d) des moyens (111) permettant de recueillir le fluide de la colonne d'absorption (11),
caractérisé par
    (e) un conduit (122) allant du côté condensation du rebouilleur (12) au côté vaporisation du condenseur (13) ;
    (f) un réservoir à liquide (14) en communication d'écoulement par le conduit avec au moins l'un :
        (i) du côté condensation du rebouilleur (12) ;
        (ii) de la portion inférieure de la colonne d'entraînement (10) ; et
        (iii) de la portion inférieure de la colonne d'absorption (11) ; et
    (g) des moyens (37, 38, 39, 30, 31) permettant de faire passer de la vapeur du réservoir à liquide (14) au côté condensation du rebouilleur (12).

13. Appareil suivant la revendication 12, comprenant en outre des moyens (128, 129) servant à décharger du liquide du réservoir à liquide.

14. Appareil suivant la revendication 13, comprenant en outre des moyens (35, 38, 39, 30, 31) servant à faire passer de la vapeur du côté vaporisation du condenseur (13) au côté condensation du rebouilleur (12).

15. Appareil suivant la revendication 13 ou 14, comprenant en outre des moyens (101, 38, 39, 30, 31) faisant passer de la vapeur de la portion supérieure de la colonne d'entraînement (10) au côté condensation du rebouilleur (12).

**Patentansprüche**

1. Verfahren zum Erzeugen von Sauerstoff mit ultrahoher Reinheit aus einer Flüssigbeschickung, bei dem

(a) Einsatzflüssigkeit (100), die Sauerstoff, leichte Verunreinigungen und schwere Verunreinigungen enthält, in eine Abstreiferkolonne (10) eingebracht wird;

(b) Einsatzflüssigkeit in der Abstreiferkolonne (10) nach unten geleitet wird und aus der nach unten strömenden Flüssigkeit leichte Verunreinigungen in nach oben strömenden Dampf abgestreift werden;

(c) erhaltene Flüssigkeit durch indirekten Wärmeaustausch mit kondensierendem Fluid verdampft wird, ein erster Dampfteil (110) der verdampften Flüssigkeit in eine Absorptionskolonne (11) geleitet und ein zweiter Teil der verdampften Flüssigkeit als der nach oben strömende Dampf in der Abstreiferkolonne (10) nach oben geleitet wird;

(d) der erste Dampfteil (110) in der Absorptionskolonne (11) nach oben geleitet wird und schwere Verunreinigungen aus hochsteigendem Dampf in nach unten fließender Flüssigkeit absorbiert werden, um Sauerstoffdampf von ultrahoher Reinheit zu erzeugen;

(e) Sauerstoffdampf von ultrahoher Reinheit kondensiert und erhaltener flüssiger Sauerstoff von ultrahoher Reinheit als nach unten fließende Flüssigkeit in der Absorptionskolonne (11) nach unten geleitet wird, und

(f) Produktsauerstoff von ultrahoher Reinheit gewonnen wird,

dadurch gekennzeichnet, daß

- ein Teil des kondensierten Fluids (32), das bei dem indirekten Wärmeaustausch des Verfahrensschrittes (c) erhalten wird, mit Sauerstoff von ultrahoher Reinheit in indirekten Wärmeaustausch gebracht wird, um die Kondensation des Verfahrensschrittes (e) durchzuführen und dadurch verdampftes Fluid (35) zu erzeugen, und
- mindestens eines der folgenden Medien
    (i) kondensiertes Fluid (33) aus dem indirekten Wärmeaustausch des Verfahrensschrittes (c),
    (ii) Flüssigkeit (102) aus dem unteren Teil der Abstreiferkolonne (10); und
    (iii) Flüssigkeit (112) aus dem unteren Teil der Absorptionskolonne (11)
    einem Flüssigkeitsspeicher (14) zugeleitet, aus der resultierenden Flüssigkeit in dem Flüssigkeitsspeicher Dampf durch Entspannen erzeugt und Entspannungsdampf (37) als das kondensierende Fluid zum Durchführen der Verdampfung des Verfahrensschrittes (c) kondensiert wird.

2. Verfahren nach Anspruch 1 bei dem mindestens eines der folgenden Medien

(iv) Dampf (101) von dem oberen Teil der Abstreiferkolonne (10) und
(v) verdampftes Fluid (35)

dem Entspannungsdampf (37) vor der Verdampfung des Verfahrensschrittes (c) zugesetzt wird.

3. Verfahren nach Anspruch 1 oder 2, bei dem Flüssigkeit aus dem Flüssigkeitsspeicher (14) als flüssiger Produktsauerstoff (128) gewonnen wird.

4. Verfahren nach einem der vorhergehenden Ansprüche, bei dem die Abstreiferkolonne (10) und die Absorptionskolonne (11) derart betrieben werden, daß der Produktsauerstoff von ultrahoher Reinheit eine Sauerstoffkonzentration von mindestens 99,999 Prozent hat.

5. Verfahren nach einem der vorhergehenden Ansprüche, bei dem Produktsauerstoff von ultrahoher Reinheit als Dampf vor der Kondensation des Verfahrensschrittes (e) gewonnen wird.

6. Verfahren nach einem der vorhergehenden Ansprüche, wobei Produktsauerstoff von ultrahoher Reinheit als Flüssigkeit (111) nach der Kondensation des Verfahrensschrittes (e) gewonnen wird.

7. Verfahren nach einem der vorhergehenden Ansprüche, wobei die Abstreiferkolonne (10) derart betrieben wird, daß der Argonabstreiffaktor S größer als 1 ist wobei S = KV/L ist, wobei V der molare Dampfstrom in der Abstreiferkolonne ist, wobei L der molare Flüssigkeitsstrom in der Abstreiferkolonne ist, und wobei K das Verhältnis zwischen dem Molenbruch der Argonverunreinigung in der Gasphase und dem Molenbruch der Argonverunreinigung in der Flüssigphase bei thermodynamischem Gleichgewicht ist.

8.  Verfahren nach einem der vorhergehenden Ansprüche, wobei die Absorptionskolonne (11) derart betrieben wird, daß der Methanabsorptionsfaktor A größer als 1 ist, wobei A = ℓ/kv, wobei ℓ der molare Flüssigkeitsstrom in der Absorptionskolonne ist, wobei v der molare Dampfstrom in der Absorptionskolonne ist, und wobei k das Verhältnis zwischen dem Molenbruch der Methanverunreinigung in der Gasphase und dem Molenbruch der Methanverunreinigung in der Flüssigphase bei thermodynamischen Gleichgewicht ist.

9.  Verfahren nach einem der vorhergehenden Ansprüche, wobei die Einsatzflüssigkeit (100) einer kryogenen Doppelkolonnen-Lufttrennanlage an einer über dem Hauptkondensator liegenden Stelle entnommen wird.

10. Verfahren nach einem der vorhergehenden Ansprüche, wobei die Abstreiferkolonne (10) bei einem Druck im Bereich von 71 kPa (10,3 psia) bis 507 kPa (73,5 psia) betrieben wird.

11. Verfahren nach einem der vorhergehenden Ansprüche, wobei die Absorptionskolonne bei einem Druck im Bereich von 71 kPa (10,3 psia) bis 507 kPa (73,5 psia) betrieben wird.

12. Vorrichtung zum Erzeugen von Sauerstoff mit ultrahoher Reinheit aus einer Flüssigbeschickung (100), mit:

    (a) einer einen Rückverdampfer (12) aufweisenden Abstreiferkolonne (10);
    (b) einer einen Kondensator (13) aufweisenden Absorptionskolonne (11);
    (c) einer Leitungsanordnung (110) von der Verdampfungsseite des Rückverdampfers (12) zu dem unteren Teil der Absorptionskolonne (11); und
    (d) einer Anordnung (111) zum Gewinnen von Fluid aus der Absorptionskolonne (11),

gekennzeichnet durch

    (e) eine Leitungsanordnung (122) von der Kondensationsseite des Rückverdampfers (12) zu der Verdampfungsseite des Kondensators (13);
    (f) einen Flüssigkeitsspeicher (14), der über eine Leitungsanordnung mit mindestens einem der folgenden Vorrichtungsteile
        (i) der Kondensationsseite des Rückverdampfers (12);
        (ii) dem unteren Teil der Abstreiferkolonne (10); und
        (iii) dem unteren Teil der Absorptionskolonne (11)

in Strömungsverbindung steht; und

    (g) eine Anordnung (37, 38, 39, 30, 31) zum Überleiten von Dampf von dem Flüssigkeitsspeicher (14) zu der Kondensationsseite des Rückverdampfers (12).

13. Vorrichtung nach Anspruch 12 ferner versehen mit einer Anordnung (128, 129) zum Herausleiten von Flüssigkeit aus dem Flüssigkeitsspeicher.

14. Vorrichtung nach Anspruch 13 ferner versehen mit einer Anordnung (35, 38, 39, 30, 31) zum Überleiten von Dampf von der Verdampfungsseite des Kondensators (13) zu der Kondensationsseite des Rückverdampfers (12).

15. Vorrichtung nach Anspruch 13 oder 14 ferner versehen mit einer Anordnung (101, 38, 39, 30, 31) zum Überleiten von Dampf von dem oberen Teil der Abstreiferkolonne (10) zu der Kondensationsseite des Rückverdampfers (12).